# EUROPEAN PATENT SPECIFICATION

(11) **EP 0 433 364 B1**
(45) Date of publication and mention of the grant of the patent: **04.01.1995**
(21) Application number: 89910286.7
(22) Date of filing: 08.09.1989
(51) Int. Cl.: B29C 61/06, H01R 4/72

(54) **TEMPERATURE AUTO-REGULATING, SELF-HEATING RECOVERABLE ARTICLES**
SICH SELBSTERWÄRMENDE WIEDERGEWINNBARE GEGENSTÄNDE MIT WÄRMEREGELUNG
ARTICLES THERMORECUPERABLES AUTO-CHAUFFANTS, A AUTO-REGULATION DE TEMPERATURE

(30) Priority: 09.09.1988 US 242208
(43) Date of publication of application: 26.06.1991
(73) Proprietor: METCAL INC., Menlo Park California 94025 (US)
(72) Inventor: McGAFFIGAN, Thomas, H., Half Moon Bay, CA 94019 (US)
(74) Representative: DIEHL GLAESER HILTL & PARTNER
(86) International application number: PCT/US89/03873
(87) International publication number: WO 90/03090

(56) References cited:
- WO-A-84/02098

## Description

The invention is concerned with a self-heating article including a heat-recoverable member according to the preamble of claim 1, a method of protecting a substrate with the use of a self-heating, heat-recoverable article including a heat-recoverable member according to the preamble of claim 12, and an auto-regulating system for recovering self-heating articles including a heat-recoverable member.

A self-heating article of the type, mentioned before, is disclosed in WO 84/02098. In accordance with said latter reference Curie temperature limited heating is used for various heat-recoverable articles. This is done by the use of ferromagnetic materials having the desired Curie temperature in electrically conductive layers to provide auto-regulated heating to the Curie temperature of the material upon application of an alternating current to the conductive layer of ferromagnetic material. The power applied to the ferromagnetic layer is in the form of an alternating current source which produces skin effect or eddy current heating in the continuous ferromagnetic layer. As the ferromagnetic layer reaches the Curie temperature, the permeability of the layer drops and the skin depth increases, thereby spreading the current through the wider area of the ferromagnetic layer until the Curie temperature is achieved throughout and the desired heating is achieved. The alternating current is supplied to the ferromagnetic layer either directly from a power source through electrodes in the conductive layer of ferromagnetic material or is supplied inductively from an adjacent insulated conductive layer directly powered with the alternating current.

While this type of Curie temperature limited heating of heat recoverable materials and articles provides certain advantages, it is disadvantageous in many applications due to the necessity of having electrically conductive layers in the heat-recoverable articles. In many applications it is desirable to have no such electrically conductive layers or areas in the heat-recoverable article.

Document US-A-4 256 945 discloses an alternating current electrically resistive heating element including layers of ferromagnetic material having a certain Curie temperature.

These and other devices and methods for providing controllable or self-regulating, properly proportioned heating for heat-recoverable articles have not produced satisfactory results for a number of reasons. One cause for the difficulties in achieving the proper or desired control of temperature and the desired proportioning of heating is due to the fact that as the heat-recoverable article recovers, the shape, dimensions, geometry, thickness, and other physical characteristics of the heat-recoverable article change drastically and in many cases change non-uniformly over the different parts and areas of the heat-recoverable article.

In other articles wherein the thickness or mass of the heat-recoverable material differs in various parts of the heat-recoverable article, the problem has been to obtain appropriate heat distribution and sufficient heating in each of the various areas of different thickness or different mass in order to achieve sufficient recovery of the higher mass areas without overheating the areas of lower mass.

In view of the insufficiencies and certain disadvantages of the prior art devices and articles, it is an object of the present invention to provide auto-regulating, heat-recoverable articles as well as systems for using those articles which do not suffer from the insufficiencies or disadvantages mentioned above.

The foregoing objects and other objects of the invention have been achieved by the combination of features described in independent claims 1, 12 and 17. Further advantageous features of the present invention are evident from the dependent claims. With this type of self-heating article the heating particles are present in non-conductive layers which results in heating by hysteresis losses rather than by resistance heating. Thereby it is also possible to distribute the heating particles more evenly over different areas of the article.

In preferred aspects, this invention provides the above articles, methods, systems and assemblies wherein the articles include connectors which contain fusible materials such as solder. In other preferred aspects, the power supply used in this invention is preferred to be a constant current power supply, which provides certain advantages with respect to the auto-regulation aspects of this invention.

### Brief Description of the Drawing

Figure 1 is a cutaway side view of a heat-recoverable connector in accordance with this invention.

Figure 2 is a cross-sectional view of a sheet made in conformity with this invention.

Figure 3 illustrates particles dispersed throughout a sleeve made by co-extrusion.

Figure 4 illustrates particles dispersed throughout a sleeve which has a solder preform.

Figure 5 illustrates particles dispersed throughout a sleeve which has meltable thermoplastic inserts and a solder preform.

Figure 6 illustrates a cross-sectional view of a double sleeve arrangement.

Figures 7 and 8 illustrate systems and assemblies according to this invention.

### Detailed Description of the Invention

This invention is based at least in part on the realization and discovery that sufficient heat can be applied to heat-recoverable articles in an auto-regulated manner to efficiently recover the heat-recoverable article in a manner such that overheating and under-heating areas of the articles are avoided. This invention is also at least in part based upon the realization that the entire power and energy for recovering the heat-recoverable device can be provided by an external alternating magnetic field -- without the need for applying external heat, without the need for supplying any electrical current to or through the heat-recoverable article itself, and without the need for the heat-recoverable article to contain any electrically conductive layers, areas, or contacts.

This invention comprises a particular combination of heat-recoverable material with "lossy heating particles" having a specific thermal and functional relationship with the heat-recoverable material. The lossy heating particles may be present in a layer on the surface of the heat-recoverable article or on the surface of the heat-recoverable material in the article, or may be dispersed in the heat-recoverable material or otherwise positioned in the atricle, as long as the heat from the lossy heating particles can effectively reach the heat-recoverable material. The "layer" of lossy heating particles may be present as particles dispersed in the heat-recoverable material or dispersed in another material layer adjacent to or in thermal contact with the heat-recoverable material. This particle layer is electrically non-conductive, due either to the arrangement of the particles or to the properties of the particles themselves. In this respect it is generally preferred to use electrically non-conductive ferrimagnetic particles and, more preferably, ferrite particles. Alternatively, if electrically conductive particles are used, they may be dispersed in or on the heat-recoverable material in such a fashion that the particles do not form electrically conductive pathways through or on the heat-recoverable material. Also, if it is desired to use electrically conductive particles, they can be coated with an electrically insulating layer or can be dispersed in a binder material which electrically insulates the articles from each other to prevent them from forming an electrically conductive pathway or layer.

The term "lossy heating particles" as used herein means any particle having particular properties which result in the particles being capable of generating sufficient heat for purposes of this invention when subjected to an alternating magnetic field having a specified frequency. Thus, any particle having these properties and being useful in the present invention is within the scope of this definition. As pointed out herein, there has been inconsistent and/or confusing terminology used in association with particles which respond to magnetic fields. While not being bound by particular terminology, the lossy heating particles useful in this invention generally fall into the two categories of particles known as ferromagnetic particles and ferrimagnetic particles.

In general, the ferrimagnetic particles, such as ferrites, are preferred because they are usually non-conductive particles and because they produce heat by hysteresis losses when subjected to an alternating magnetic field. Therefore, ferrimagnetic particles will produce heating by hysteresis losses in the appropriate alternating magnetic field, essentially regardless of whether the particle size is large or small.

Also useful in this invention, and preferred in some applications, are the ferromagnetic particles which are electrically conductive. Ferromagnetic particles will produce heating dominated by hysteresis losses if the particle size is small enough. However, since ferromagnetic particles are conductive, large particles will produce significant eddy current losses at the skin or surface thereof.

It is generally preferred in the practice of this invention to provide heating by hysteresis losses because, the particle size can be much smaller for effective hysteresis loss heating than with effective eddy current surface heating, i.e., for hysteresis loss heating, the smaller particle size enables more uniform heating of the article and does not degrade the mechanical properties of the material, because the smaller particles can be more dispersed than larger particles. The more dispersed, smaller particles thereby usually provide more efficient heating. However, the particle size is to be at least one magnetic domain in diameter in order to provide the necessary coupling with the alternating magnetic field, i.e., the particles are prefferably as small as practical but are multi-domain particles.

The heating produced by the lossy heating particles useful in the present invention can be either provided by or can be enhanced by coating the particles with an electrically-resistive coating. As will be recognized by one skilled in the art, particles that are not lossy because they do not exhibit hysteresis losses, can be converted to lossy heating particles for use in this invention by placing such a coating on the particles. The coating produces eddy current losses associated with the surface effect of the coated particles. At the same time, particles which are lossy due to hysteresis losses can be enhanced in their effectiveness for some applications by such coatings, thereby providing lossy particles which produce heating both by hysteresis losses and by eddy current losses.

Magnetic particles which are useful in the present invention are known in the art. For example, in White, U.S. Patent 3,319,846, finely divided (0.01-5 micron), ferrite particles are suspended in or are coated on a selected heat-activatable material. The material may be in the form of a thermoplastic, hot-melt adhesives, etc. According to White, ferrite particles are exposed to a magnetic field of at least 10 megahertz, preferably 40 megahertz, in order to generate the inductive heating. The particles heat to a maximum temperature referred to as the "Neel" temperature. The Neel transition temperature of the particle (similar to the Curie temperature) is the point at which the magnetic field ceases to have an effect on the particles, and the temperature reaches a stable maximum. While White's disclosure describes a number of particles useful in the present invention, there are other particles useful in this invention.

Additionally, it is known that ferrites can possess any range of Curie temperatures by compounding them with zinc, manganese, cobalt, nickel, lithium, iron, or copper, as disclosed in two publications: "The Characteristics of Ferrite Cores with Low Curie Temperature and Their Application" by Murkami, IEEE Transactions on Magnetics, June 1965, page 96, etc., and Ferrites by Smit and Wijn, John Wiley & Son, 1959, page 156, etc.

There has been some inconsistent usage of terminology with respect to ferromagnetic particles in the past. For example, compare the nomenclature used in White referred to above and in Lee, Magnetism, an Introductory Survey, Dover Publications, Inc., New York, 1970, Figure 44, at page 203. The preferred nomenclature is believed to be that of Lee and is primarily used herein. See also Brailsford, Magnetic Materials, Methuen & Co. Ltd., London, 1960.

The term "ferromagnetic" is frequently used to refer to magnetic particles generically regardless of their particular properties. Thus, ferrites have usually been referred to as being "ferromagnetic" or included in the general group of ferromagnetic materials. However, for purposes of this invention, it is preferred to use the terminology shown in Figure 44 of Lee, referred to above, wherein the magnetic particles are classified in two groups, ferromagnetic and ferrimagnetic. The ferromagnetic particles are usually considered to be electrically conductive materials which have various magnetic properties. The ferrimagnetic particles are usually considered to be electrically non-conductive materials which also have various magnetic properties. Ferrites are usually considered to be electrically non-conductive materials and are thus in the class of ferrimagnetic materials. Both ferromagnetic materials and ferrimagnetic materials can be low-loss, or non-lossy, type of materials, which means they do not have significant energy loss or heat produced when subjected to an electric potential or magnetic field. These non-lossy type of magnetic materials are the kind used in various electric equipment components, such as ferrite cores for coils, where no or minimum energy loss/heat production is desired. However, both these materials can also be the high-loss, or lossy, type of materials, which means they will have significant energy loss and heat production when subjected to an electric potential or magnetic field. It is this class of lossy or highly lossy ferromagnetic and ferrimagnetic materials which are useful in the present invention.

Regardless of the labels or terminology for magnetic particles, the magnetic particles useful as and included within the scope of the term "lossy heating particles" for the present invention need merely to have the following properties: (1) having the desired Curie temperature for auto-regulation of the temperature when subjected to an appropriate alternating magnetic field, and (2) being sufficiently lossy, either by hysteresis losses, by eddy current losses, or both, in order to produce the desired heat when subjected to the alternating magnetic field. These particles are sometimes referred to as being "highly lossy." While the size of the particles is not particularly important in the present invention, it is desirable to use smaller particles since they can be dispersed more uniformly in the heat-recoverable material or article, thus heating more efficiently and uniformly. As recognized by one skilled in the art, the size of the particle should be no smaller than one magnetic domain, i.e., the particles should be multi-domain size particles.

As will also be recognized by one skilled in the art, the lossy heating particles, the magnetic induction coil, and the frequency, power and control mechanism for the power supply will all be selected for use in this invention so that they are matched for electrical properties and performance in the articles and systems as disclosed herein. For example, the particle size, the distribution of the particles in the heat-recoverable article, and the permeability of the particles must be considered in addition to providing an impedance-matched induction coil and power supply. As indicated herein, a preferred power supply for optimum self-regulation characteristics is one that is a constant current power supply, but other types of power supplies can be used in different embodiments of this invention depending on the particular uses and results desired for the systems of this invention. The factors involved in load matching and power supply/coil characteristics are similar to and much the same as in the systems in which ferromagnetic particles are heated by direct application of electric current. For example see, U.S. patent 4,256,945 of Carter et al., U.S. patent 4,695,713 of Krumme, and related patents.

The advent of this invention resulted from efforts to discover an inexpensive, self-heating, auto-regulating heat-recoverable sleeve for use as a connector and a method for its manufacture and use without the need for direct connection to a power source. It was found that heat-shrinkable tubing slipped over an inner sleeve incorporating particles which, when subjected to an alternating magnetic field, heat to the Curie temperature of the particles by induction heating generate sufficient heat to cause both sleeves to resume to its original, unexpanded configuration. More precisely, when the outer sleeve (driver sleeve) recovers, it forces the inner sleeve (heat-shrinkable or not) to compress against the member it surrounds. This embodiment of the present invention is but one illustration of the wide range of embodiments within the scope of the present invention.

For the purpose of experimentation, heat-generating particles were deposited on the outer surface of the inner sleeve which was then covered with an additional sleeve. Formation of the particle-containing, heat-recoverable sleeve can also be achieved by co-extrusion of the particles onto or within the sleeve.

In order to further describe and illustrate the present invention, reference is now made to the drawing attached hereto.

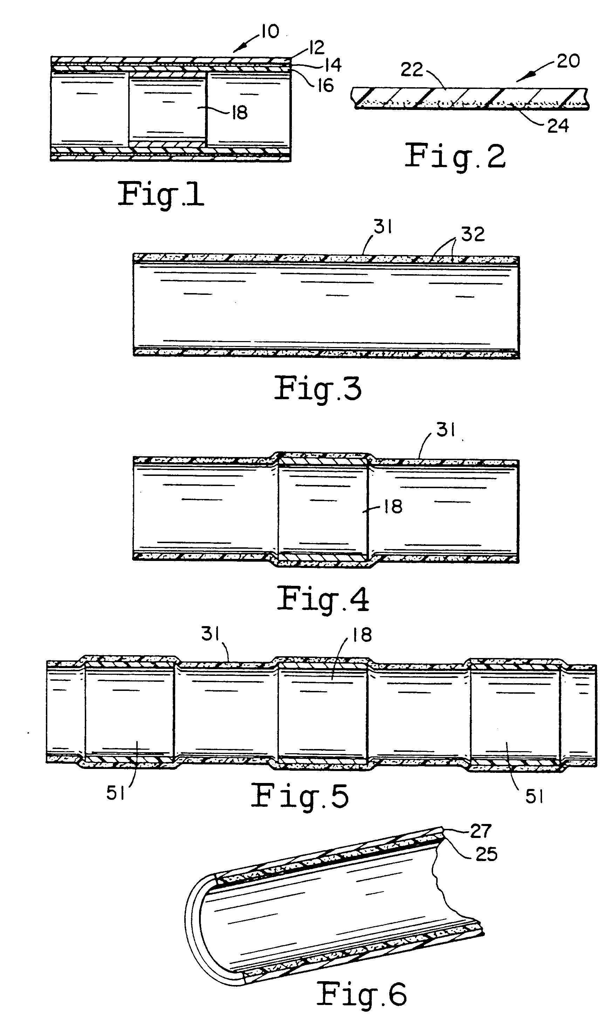

Figure 1 depicts connector 10 made in accordance with this invention. Connector 10 includes outer tube 12 which is heat-shrinkable, magnetic particle coating 14, and inner tube 16 which is also heat-shrinkable. Disposed within inner tube 16 is solder preform 18. Outer tube 12, referred to herein as driver tube 12, is composed of any conventional heat-shrinkable material.

Generally, such heat-shrinkable materials are composed of cross-linked polymers which have been rendered dimensionally heat-unstable during processing where, upon exposure to heat at or in excess of the crystalline transition temperature, the material recovers to its dimensionally heat-stable configuration. As is readily appreciated by those of ordinary skill in the art, there are many such materials, polymeric or not, exhibiting a large range of crystalline transition temperatures which are selected to suit a particular purpose based upon the physical characteristics of both the material and its crystalline temperature.

Magnetic particle coating 14 is composed of any appropriate binding material such as a wax, silicone cement, or simply a layer of finely-ground powder deposited on driver tube 12 by conventional mechanical or vapor deposition means. The powder, for example, can be Fair-Rite (trademark) No. 73 (which is available from Fair-Rite Products Corp., Wallkill, New York) which when ground into a fine powder, exhibits the characteristics desirable for practice of this invention. Fair-Rite No. 73, itself, possesses properties including µᵢ of 2500, µ max of 4000, Bₛ gauss at 13 oer of 4000, a Curie temperature of 160° C, volume resistivity in ohm-centimeter of 100, and H_{c} in oer of 0.18. Both of these materials exhibit a sufficiently lossy nature at 13.56 megahertz and far below that frequency to provide the necessary induction heating effects at relatively low frequencies.

It has also been found that metal plating the ferrite particles with a highly electrically-resistive metal enhances heat generation due to eddy currents established in the resistive plating. It is also possible to coat the particles with a conductive material, but if a less resistive material (metal, conductive polymer, etc.) is employed, then caution must be exercised to avoid formation of an electrically conductive pathway between the particles.

Moving now to the composition and structure of inner tube 16, it may be selected from any material as long as it adequately serves to positionally stabilize magnetic particle coating 14 relative to driver tube 12. Hence, inner tube 16 need not necessarily be formed from a heat-recoverable material, but, if not, it must be easily deformable so as not to impede the heat-recovery of driver tube 12 as it shrinks inwardly. However, as a practical matter, inner tube 16 is preferably composed of the same material as driver tube 12 and has an outer diameter corresponding to the inner diameter of driver tube 12.

Where desirable, connector 10 can incorporate solder preform 18 to more securely join wires, wire terminals, or the like contained within the tube. The composition of solder preform 18 is of any conventional alloy as long as it is compatible with the foregoing and thus has a melting temperature below that of the Curie temperature of the particles contained in magnetic particle coating 14.

Preferably, solder preform 18 would have a melting temperature tailored to be less than the Curie temperature of the particles and preferrably in the same range as the crystalline transition temperature of driver tube 12 whereupon application of the alternating magnetic field will inductively heat the ferromagnetic particles and cause solder preform 18 to soften and melt as tubes 16 and 12 contract. The melted solder is then pressed around wires or other substrates present inside the connector, then the solder hardens once the application of the alternating magnetic field is terminated, thereby forming a strong, secure connection.

Figure 2 illustrates tube 20 in sheet form. Like driver tube 12 in Figure 1, sheet 22 is composed of a heat-shrinkable material. Embedded layer 24, the equivalent of magnetic particle coating 14, comprises the non-conductive magnetic particles either alone or combined with a bonding agent. The sheet form, in contrast to the tube form, is advantageous in certain applications which do not permit the use of a tube. The sheet can be wrapped around a subject member (spliced wires, etc.) and exposed to an appropriate magnetic field to induce heating and heat shrinking.

Referring to the equipment employed in the experimental phase, a constant current power supply RFG30 available from Metcal, Inc., Menlo Park, California, having an adjustable current power output control was selected. This power supply was modified to have a mannual adjustment of the level of the current output, but once set it operated at the selected constant current power setting. The power supply was attached to an inductance coil through a Transmatch III matching network available from MFJ Enterprises, Starkville, Mississippi. The principal characteristics of the coil included 13.5 turns of 0.035 inch (0.89 millimeter) diameter HML wire, a length of 0.55 inch (13.97 millimeters), and an inner diameter of 0.215 inch (5.46 millimeters). The matching network was tuned to provide an initial maximum transmission of 5 watts to the induction coil prior to introduction of connector 10. Once inserted, connector 10 caused the power to rise to approximately 13 watts and to auto-regulate down to 8 watts. Thus, a net change from 8 to 3 watts was exhibited.

Given the foregoing arrangement, a variety of materials was tested. Those materials, particles, power requirements, and recovery time (the time required to induce substantially complete recovery of the dimensionally heat-unstable materials to a dimensionally heat-stable configuration), are provided in Table I.

**Table I**

| | |
|---|---|
| Heat-shrinkable tube composition (inner and outer) | Kynar |
| Tube outer diameter | 0.210 inch (5.33 mm) |
| Tube wall thickness | 0.007 inch (0.18 mm) |
| Tube length | 0.511 inch (12.99 mm) |
| Heating particles | Fair-Rite 73 powder |
| Initial power (net) | 8 watts |
| Regulated power (net) | 3 watts |
| Recovery time | 10-15 sec. |

Figures 3-5 illustrate various arrangements of materials in a plastic tube such as the inner tube 16 of Figure 1. In Figure 3, plastic tube 31 is of an appropriate thermoplastic with particles 32 dispersed evenly throughout. Without solder or other inserts, the tube can be used merely as a heat recoverable sleeve. Figure 4 illustrates the same tube as Figure 3 with solder preform 18 disposed within plastic tube 31. In Figure 1, the particles are dispersed on surface 14 of the plastic tube 16 and not within the plastic. Figure 5 illustrates meltable plastic inserts 51 within the plastic tube 31 of Figure 3 together with solder preform 18 whereby during a single heating operation, solder preform 18 is melted to join the members, and meltable plastic inserts 51 flow and provide a waterproof seal. Such inserts can be thermoplastic, fusible, thermosetting, self sealing, or other useful inserts.

Referring to Figure 6, an inner tube 25 has ferrite particles either incorporated therein or coated on its outer surface and an outer tube 27 of heat-shrinkable material. The inner tube 25 may also, but not necessarily, be of heat-shrinkable material. Upon heating, the outer tube 27 shrinks and collapses the structure about a substrate or member to be encased.

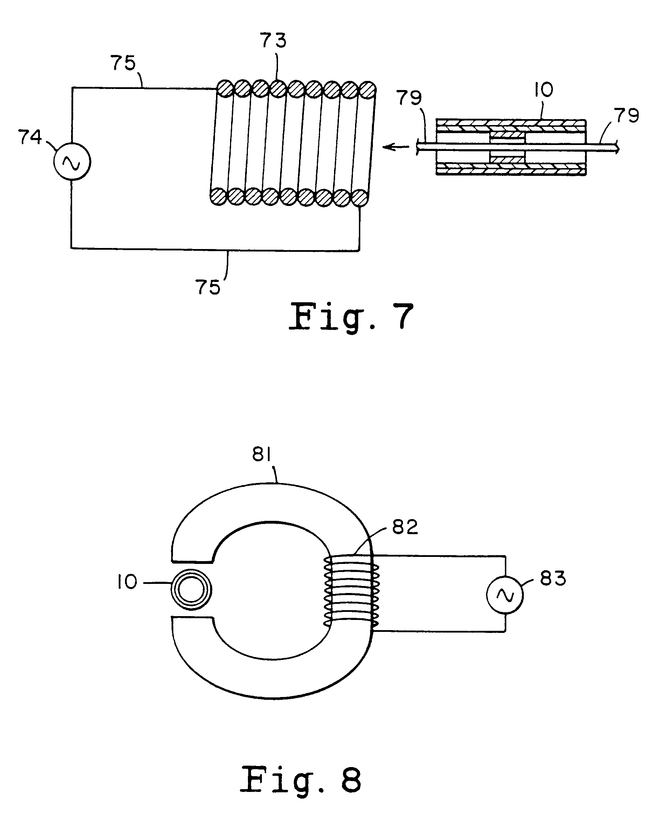

Referring to Figure 7, heat-recoverable connector 10 of Figure 1 is adapted for recovering onto and connecting wires 79. Induction coil 73 (shown in section view) is connected to alternating current power supply 74 by leads 75. Preferably, the power supply is a constant current power supply, as defined and illustrated in U.S. Patent No. 4,789,767 to Doljack, and U.S. application serial no. 169,027, filed March 3, 1988, both of which are incorporated herein by reference. The induction coil, which is adapted for receiving connector 10, generates an alternating magnetic field in the area of connector 10 causing particles in layer 14 to heat connector 10, thereby recovering connector 10 onto substrates 79.

Figure 8 illustrates another embodiment for generating the alternating magnetic field for use in this invention. Split torrid core 81 generates a magnetic field in the area adapted for receiving connector 10. Coil 82 is connected to alternating current power supply 83 to produce the desired alternating magnetic field.

As will be recognized by those skilled in the art from the above general description of this invention and the above description of preferred embodiments, the present invention provides a number of advantages over the prior art devices and methods for heating and recovering heat-recoverable articles. For example, the present invention is very efficient in heat and energy usage because the heat and energy is supplied directly to the heat-recoverable material and can be arranged so the heat is supplied internally in the heat-recoverable article, thus eliminating any exterior waste of heat and energy. Moreover, the present invention enables one to use embodiments that are suitable for recovery of heat-recoverable articles in environments not suitable for recovery of articles by external heat sources such as a flame. Among those environments are underground installations such as for telephone cables and power cables where the use of an open flame or heat sources which can possibly ignite combustible gasses are not permitted. Another environment in which the present invention enables the construction of embodiments for recovery of heat-recoverable articles is underwater applications. Other embodiments for various environments will be apparent to one skilled in the art following the teachings of this invention.

It will also be apparent to one skilled in the art that various prior art elements may be used in combination with the present invention. For example, thermochromic indicators and coatings may be used on the heat-recoverable articles of the present invention to serve as an indicator and quality control device to assure that the operator retains the heat-recoverable article in the alternating magnetic field for a sufficient period of time to produce the desired temperature and heating. For example, on a continuous production line, the thermochromic indicator can be used to indicate that the heat-recoverable article has moved through the magnetic field at the desired rate and that the desired Curie temperature was, in fact, reached and/or that the desired degree of heating has, in fact, occurred.

Indication of sufficient heating is also inherent in the system of this invention by monitoring the power supplied to the heat-recoverable article by the system. When the article is below the Curie temperature, the system will deliver maximum power to the article. Once the article is substantially at the Curie temperature, its coupled resistance will decrease and the power delivered to it will also decrease to a minimum level. By monitoring the powere level one can easily determine when the desired temperature has been reached and can then control the length of time that the system maintains the article at that temperature by its auto-regulation capabilities.

Given the foregoing objects, description, and examples of the invention, many variations and modifications, both of the devices and methods, should now be readily apparent to the person of ordinary skill in the art. These variations and modifications are intended to fall within the scope and intent of this invention as defined by the following claims.

## Claims

1. A self-heating article (10) including a heat-recoverable member, comprising self-regulating heating means with a layer of magnetic material having a Curie temperature in the region of the recovery temperature of said heat-recoverable member,
**characterized** by
a) a layer (12,20,27,31) of heat-recoverable material having a recovery temperature T, and
b) an electrically non-conductive layer (14,24,25) of lossy heating particles having a Curie temperature of T or greater, whereby said particles are capable of heating to the Curie temperature, when subjected to an alternating magnetic field and are capable of self-regulating at the Curie temperature while in the magnetic field, said layer (14,24,25) of particles being in thermal contact with said layer (12,20,27,31) of heat recoverable material.

2. An article according to claim 1, wherein said lossy heating particles comprise ferromagnetic particles.

3. An article according to claim 1 or 2, wherein said lossy heating particles comprise ferrimagnetic particles.

4. An article according to any one of the preceding claims, wherein the Curie temperature T is below the degradation temperature of the heat-recoverable material.

5. An article according to any one of the preceding claims, wherein said particles comprise electrically non-conductive particles.

6. An article according to any one of the preceding claims, wherein said particles are coated with a highly electrically-resistive material.

7. An article according to any one of the preceding claims, further comprising a layer (16) of deformable material in contact with said layer (14,24,25) of particles for positionally stabilizing said layer of particles.

8. An article according to any one of the preceding claims, further comprising a thermoplastic, fusible, thermosetting, or self-sealing member (51).

9. An article according to any one of the preceding claims, wherein the article is a connector (10) comprising a solder preform (18) having a melting temperature less than the Curie temperature T of said particles.

10. An article according to any one of the preceding claims, wherein said lossy heating particles are arranged in said layer (12,20,27,31) of heat-recoverable material such that the particles do not provide an electrically conductive path in said material.

11. A method of protecting a substrate (79) with the use of a self-heating, heat recoverable article (10) including a heat-recoverable member, comprising self-regulating heating means with a layer of magnetic material having a Curie temperature T in the region of the recovery temperature of said heat-recoverable member,
**characterized by**
a) placing over said substrate (79) a layer (12,20,27,31) of heat-recoverable material having a recovery temperature T,
b) placing over said substrate (79) an electrically non-conductive layer (14,24,25) of lossy heating particles having a Curie temperature of T or greater, whereby said particles are capable of heating to the Curie temperature, when subjected to an alternating magnetic field and are capable of self-regulating at the Curie temperature while in the magnetic field, said layer (14,24,25) of particles being in thermal contact with said layer (12,20,27,31) of heat recoverable material, and
c) subjecting said article (10) to an alternating magnetic field to effect recovery of said article (10) onto the substrate (79).

12. A method according to claim 11, wherein said lossy heating particles comprise ferromagnetic particles.

13. A method according to claim 11, wherein said lossy heating particles comprise ferrimagnetic particles.

14. A method according to claim 11, wherein said lossy heating particles are coated with a highly electrically-resistive material.

15. A method according to one of claims 11 to 14, wherein the article (10) comprises a layer (51) of readily deformable material in contact with said layer (14,24,25) of lossy particles for positionally stabilizing said layer of particles.

16. An auto-regulating system for recovering self-heating articles (10) including a heat-recoverable member and comprising self-regulating heating means with a layer of magnetic material having a Curie temperature T in the region of the recovery temperature of said heat-recoverable member,
**characterized** by
a) a layer (12,20,27,31) of heat-recoverable material having a recovery temperature T,
b) an electrically non-conductive layer (14,24,25) of lossy heating particles having a Curie temperature of T or greater, whereby said particles are capable of heating to the Curie temperature, when subjected to an alternating magnetic field and are capable of self-regulating at the Curie temperature while in the magnetic field, said layer (14,24,25) of particles being in thermal contact with said layer (12,20,27,31) of heat recoverable material,
c) an induction coil (73) adapted to produce said magnetic field, and
d) a power supply (70,83) adapted to provide power to the induction coil (73) as alternating current at a preselected frequency effective for heating said particles.

17. A system according to claim 16, wherein the power supply (70,83) comprises a constant current power supply.

## Patentansprüche

1. Selbsterwärmender Artikel (10) mit einem durch Wärme rückverformbaren Element, der ein selbstregulierendes Heizmittel mit einer Schicht aus magnetischem Material mit einer Curie-Temperatur im Bereich der Rückverformungstemperatur des durch Wärme rückverformbaren Elements aufweist, gekennzeichnet durch
a) eine Schicht (12, 20, 27, 31) eines durch Wärme rückverformbaren Materials mit einer Rückverformungstemperatur T, und
b) eine elektrisch nichtleitende Schicht (14, 24, 25) aus mit Verlust behafteten Heizpartikeln mit einer Curie-Temperatur von T oder höher, wobei die Partikel in der Lage sind, sich auf die Curie-Temperatur zu erwärmen, wenn sie einem magnetischen Wechselfeld ausgesetzt werden, und sich auf der Curie-Temperatur selbst zu regulieren, während sie sich in dem Magnetfeld befinden, wobei die Partikelschicht (14, 24, 25) in Thermokontakt mit der Schicht (12, 20, 27, 31) aus wärmerückverformbarem Material ist.

2. Artikel nach Anspruch 1, bei dem die mit Verlust behafteten Heizpartikel ferromagnetische Partikel umfassen.

3. Artikel nach Anspruch 1 oder 2, bei dem die mit Verlust behafteten Heizpartikel ferrimagnetische Partikel umfassen.

4. Artikel nach einem der vorhergehenden Ansprüche, wobei die Curie-Temperatur T unter der Abbautemperatur des wärmerückverformbaren Materials liegt.

5. Artikel nach einem der vorhergehenden Ansprüche, wobei die Partikel elektrisch nichtleitende Partikel umfassen.

6. Artikel nach einem der vorhergehenden Ansprüche, wobei die Partikel mit einem Material mit hohem elektrischen Widerstand beschichtet sind.

7. Artikel nach einem der vorhergehenden Ansprüche, der ferner eine Schicht (16) aus verformbarem Material aufweist, die mit der Partikelschicht (14, 24, 25) in Berührung steht, um diese in ihrer Position zu stabilisieren.

8. Artikel nach einem der vorhergehenden Ansprüche, der ferner ein thermoplastisches, leicht schmelzbares, wärmehärtbares oder selbstdichtendes Element (51) aufweist.

9. Artikel nach einem der vorhergehenden Ansprüche, wobei der Artikel ein Verbindungsstück (10) ist, das ein Lotformteil (18) mit einer Schmelztemperatur unter der Curie-Temperatur T der Partikel umfaßt.

10. Artikel nach einem der vorhergehenden Ansprüche, wobei die mit Verlust behafteten Heizpartikel in der Schicht (12, 20, 27, 31) aus wärmerückverformbarem Material derart angeordnet sind, daß sie keine elektrisch leitende Bahn in diesem Material bilden.

11. Verfahren zum Schutz eines Substrats (79) unter Verwendung eines selbsterwärmenden, durch Wärme rückverformbaren Artikels (10) mit einem durch Wärme rückverformbaren Element, der selbstregulierende Heizmittel mit einer Schicht aus magnetischem Material mit einer Curie-Temperatur T im Bereich der Rückverformungstemperatur des wärmerückverformbaren Elements aufweist, gekennzeichnet durch folgende Schritte, in denen
a) das Substrat (79) mit einer Schicht (12, 20, 27, 31) aus wärmerückverformbarem Material mit einer Rückverformungstemperatur T bedeckt wird,
b) das Substrat (79) mit einer elektrisch nichtleitenden Schicht (14, 24, 25) aus mit Verlust behafteten Heizpartikeln mit einer Curie-Temperatur von T oder höher bedeckt wird, wobei die Partikel in der Lage sind, sich auf die Curie-Temperatur zu erwärmen, wenn sie einem magnetischen Wechselfeld ausgesetzt werden, und sich auf der Curie-Temperatur selbst zu regulieren, während sie sich in dem Magnetfeld befinden, wobei die Partikelschicht (14, 24, 25) in Thermokontakt mit der Schicht (12, 20, 27, 31) aus wärmerückverformbarem Material ist, und
c) der Artikel (10) einem magnetischen Wechselfeld ausgesetzt wird, um die Rückverformung des Artikels (10) auf dem Substrat (79) zu bewirken.

12. Verfahren nach Anspruch 11, wobei die mit Verlust behafteten Heizpartikel ferromagnetische Partikel umfassen.

13. Verfahren nach Anspruch 11, wobei die mit Verlust behafteten Heizpartikel ferrimagnetische Partikel umfassen.

14. Verfahren nach Anspruch 11, wobei die mit Verlust behafteten Heizpartikel mit einem Material mit hohem elektrischen Widerstand beschichtet sind.

15. Verfahren nach einem der Ansprüche 11 bis 14, wobei der Artikel (10) eine Schicht (51) aus leicht verformbarem Material aufweist, die mit der Schicht (14, 24, 25) aus mit Verlust behafteten Partikeln in Berührung steht, um diese in ihrer Position zu stabilisieren.

16. Selbstregulierungssystem zur Rückverformung von selbsterwärmenden Artikeln (10) mit einem durch Wärme rückverformbaren Element und selbstregulierenden Heizmitteln mit einer Schicht aus Magnetmaterial mit einer Curie-Temperatur T im Bereich der Rückverformungstemperatur des wärmerückverformbaren Elements, gekennzeichnet durch
a) eine Schicht (12, 20, 27, 31) eines durch Wärme rückverformbaren Materials mit einer Rückverformungstemperatur T, und
b) eine elektrisch nichtleitende Schicht (14, 24, 25) aus mit Verlust behafteten Heizpartikeln mit einer Curie-Temperatur von T oder höher, wobei die Partikel in der Lage sind, sich auf die Curie-Temperatur zu erwärmen, wenn sie einem magnetischen Wechselfeld ausgesetzt werden, und sich auf der Curie-Temperatur selbst zu regulieren, während sie sich in dem Magnetfeld befinden, wobei die Partikelschicht (14, 24, 25) in Thermokontakt mit der Schicht (12, 20, 27, 31) aus wärmerückverformbarem Material ist.
c) eine Induktionsspule (73) zur Erzeugung des Magnetfeldes, und
d) eine Energieversorgungseinrichtung (70, 83), welche die Induktionsspule (73) mit Energie in Form eines Wechselstroms mit einer vorgegebenen Frequenz versorgt, die zum Aufheizen der Partikel geeignet ist.

17. System nach Anspruch 16, wobei die Energieversorgungseinrichtung (70, 83) eine Dauerstromversorgung umfaßt.

## Revendications

1. Article auto-chauffant (10) comprenant un élément thermorécupérable, constitué de moyens chauffants à auto-régulation possédant une couche de matériau magnétique ayant une température de Curie dans la région de la température de récupération dudit élément thermorécupérable, caractérisé par
a) une couche (12, 20, 27, 31) de matériau thermorécupérable ayant une température de récupération T, et
b) une couche électriquement non conductrice (14, 24, 25) constituée de particules chauffantes de pertes ayant une température de Curie de T ou plus, de sorte que lesdites particules sont aptes à chauffer jusqu'à la température de Curie lorsqu'elles sont soumises à un champ magnétique alternatif et sont aptes à s'auto-réguler à la température de Curie lorsqu'elles se trouvent dans le champ magnétique, ladite couche (14, 24, 25) de particules étant en contact thermique avec ladite couche (12, 20, 27, 31) de matériau thermorécupérable.

2. Article selon la revendication 1, dans lequel lesdites particules chauffantes de pertes comprennent des particules ferromagnétiques.

3. Article selon la revendication 1 ou 2, dans lequel lesdites particules chauffantes de pertes comprennent des particules ferrimagnétiques.

4. Article selon l'une quelconque des revendications précédentes, dans lequel la température de Curie T est inférieure à la température de dégradation du matériau thermorécupérable.

5. Article selon l'une quelconque des revendications précédentes, dans lequel lesdites particules comprennent des particules électriquement non conductrices.

6. Article selon l'une quelconque des revendications précédentes, dans lequel lesdites particules sont revêtues d'un matériau de haute résistivité électrique.

7. Article selon l'une quelconque des revendications précédentes, comprenant en outre une couche (16) d'un matériau déformable en contact avec ladite couche (14, 24, 25) de particules pour stabiliser la position de ladite couche de particules.

8. Article selon l'une quelconque des revendications précédentes, comprenant en outre un élément thermoplastique, fusible, thermodurcissable ou auto-étanchéifiant (51).

9. Article selon l'une quelconque des revendications précédentes, dans lequel l'article est un connecteur (10) comprenant une préforme en brasure (18) ayant une température de fusion inférieure à la température de Curie T desdites particules.

10. Article selon l'une quelconque des revendications précédentes, dans lequel lesdites particules chauffantes de pertes sont disposées dans ladite couche (12, 20, 27, 31) de matériau thermorécupérable de façon à ce que les particules ne créent pas un passage électriquement conducteur dans ledit matériau.

11. Procédé de protection d'un substrat (79) à l'aide d'un article auto-chauffant, thermorécupérable (10) comprenant un élément thermorécupérable, constitué de moyens chauffants auto-régulants possédant une couche de matériau magnétique ayant une température de Curie T dans la région de la température de récupération dudit élément thermorécupérable, caractérisé par
a) le placement sur ledit substrat (79) d'une couche (12, 20, 27, 31) de matériau thermorécupérable ayant une température de récupération T,
b) le placement sur ledit substrat (79) d'une couche électriquement non conductrice (14, 24, 25) constituée de particules chauffantes de pertes ayant une température de Curie de T ou plus, de sorte que lesdites particules sont aptes à chauffer jusqu'à la température de Curie lorsqu'elles sont soumises à un champ magnétique alternatif et sont aptes à s'auto-réguler à la température de Curie lorsqu'elles se trouvent dans le champ magnétique, ladite couche (14, 24, 25) de particules étant en contact thermique avec ladite couche (12, 20, 27, 31) de matériau thermorécupérable, et
c) le fait de soumettre ledit article (10) à un champ magnétique alternatif pour récupérer ledit article (10) sur le substrat (79).

12. Procédé selon la revendication 11, dans lequel lesdites particules chauffantes de pertes comprennent des particules ferromagnétiques.

13. Procédé selon la revendication 11, dans lequel lesdites particules chauffantes de pertes comprennent des particules ferrimagnétiques.

14. Procédé selon la revendication 11, dans lequel lesdites particules chauffantes de pertes sont revêtues d'un matériau de haute résistivité électrique.

15. Procédé selon l'une des revendications 11 à 14, dans lequel l'article (10) comprend une couche (51) d'un matériau facilement déformable en contact avec ladite couche (14, 24, 25) de particules de pertes pour stabiliser la position de ladite couche de particules.

16. Système auto-régulant pour récupérer des articles auto-chauffants (10) comprenant un élément thermorécupérable et comprenant des moyens chauffants auto-régulants possédant une couche de matériau magnétique ayant une température de Curie T dans la région de la température de récupération dudit élément thermorécupérable, caractérisé par
a) une couche (12, 20, 27, 31) d'un matériau thermorécupérable ayant une température de récupération T,
b) une couche électriquement non conductrice (14, 24, 25) constituée de particules chauffantes de pertes ayant une température de Curie de T ou plus, de sorte que lesdites particules sont aptes à chauffer jusqu'à la température de Curie lorsqu'elles sont soumises à un champ magnétique alternatif et sont aptes à s'auto-réguler à la température de Curie lorsqu'elles se trouvent dans le champ magnétique, ladite couche (14, 24, 25) de particules étant en contact thermique avec ladite couche (12, 20, 27, 31) de matériau thermorécupérable,
c) une bobine d'induction (73) adaptée à produire ledit champ magnétique, et
d) une alimentation électrique (70, 83) adaptée à fournir de l'énergie à la bobine d'induction (73) sous forme de courant alternatif à une fréquence pré-sélectionnée, efficace pour chauffer lesdites particules.

17. Système selon la revendication 16, dans lequel l'alimentation électrique (70, 83) comprend une alimentation en courant constant.
